# EUROPÄISCHE PATENTSCHRIFT

(11) **EP 3 491 719 B1**
(45) Veröffentlichungstag und Bekanntmachung des Hinweises auf die Patenterteilung: **15.09.2021**
(21) Anmeldenummer: 17752021.0
(22) Anmeldetag: 21.07.2017
(51) Int. Cl.: H02K 11/40, H01R 39/38, H01R 39/20

(54) **ABLEITEINRICHTUNG ZUR ABLEITUNG ELEKTRISCHER STÖRUNGEN**
CONDUCTION DEVICE FOR CONDUCTING AWAY ELECTRICAL INTERFERENCE
DISPOSITIF DE DÉRIVATION POUR DÉRIVER DES PERTURBATIONS ÉLECTRIQUES

(30) Priorität: 26.07.2016 DE 102016213653
(43) Veröffentlichungstag der Anmeldung: 05.06.2019
(73) Patentinhaber: Schunk Carbon Technology GmbH, 4822 Bad Goisern (AT)
(72) Erfinder: HUBER, Florian, 4820 Bad Ischl (AT); WEBER, Markus, 4822 Bad Goisern (AT)
(74) Vertreter: advotec.
(86) Internationale Anmeldenummer: PCT/EP2017/068516
(87) Internationale Veröffentlichungsnummer: WO 2018/019725

(56) Entgegenhaltungen:
- EP-A2- 0 304 528
- WO-A1-97/01200
- DE-A1- 1 931 104
- DE-A1- 2 944 065
- DE-A1- 3 217 217
- DE-A1- 10 241 382
- DE-A1-102013 212 062

## Beschreibung

Die vorliegende Erfindung betrifft eine Ableiteinrichtung zur Ableitung elektrischer Störungen nach dem Oberbegriff des Anspruchs 1.

Ableiteinrichtungen der eingangs genannten Art sind in unterschiedlichen Ausführungsformen aus dem Stand der Technik bekannt. Insbesondere ist es bekannt, zur Ableitung niederfrequenter Gleichströme Kohlebürsten einzusetzen, die auf einem Ring in radialer Verteilung um eine Welle angeordnet sind und über Anschlusslitzen mit einem Stator kontaktiert sind. Die dabei in einer Führungseinrichtung aufgenommenen Kohlebürsten ermöglichen aufgrund ihres geringen elektrischen Widerstands eine direkte Ableitung der Ströme und können somit eine Stromführung über Lagerstellen der Welle vermeiden, die ansonsten bei Ausbildung lokal hoher Stromdichten aufgrund punktueller Verschweißungen zu Oberflächenschäden der Lagerkörper oder -ringe führen könnte.

Vorstehend sowie auch im Weiteren nachfolgend wird der Begriff "Welle" als Synonym für den Begriff "Rotorteil" verwendet. Daher sind unter dem Begriff "Welle" alle drehenden Maschinenteile zu verstehen, über die eine Ableitung von Strömen in ein Statorteil erfolgen kann.

Die bekannten Ableiteinrichtungen werden regelmäßig in der Bahntechnik eingesetzt, wo der primär eingebrachte niederfrequente Wechselstrom oder auch gleichgerichtete Arbeitsstrom über die Radachsen abfließt. Aufgrund der zunehmenden Elektrifizierung im Automotive-Bereich, beispielsweise in Form von elektrischen Antriebsmaschinen für Hybrid- oder rein elektrisch betriebene Autos, werden vergleichbare Maßnahmen erforderlich, die eine Ableitung von Strömen ermöglichen. Im Unterschied zur Bahntechnik treten bei den Kraftfahrzeugen zwischen Motorantriebswellen oder daran angeschlossenen Getriebesätzen bzw. anderen funktionalen Komponenten und den statisch ruhenden Bauteilen kontinuierlich schwankende Wechselspannungen bzw. -ströme auf. Neben den durch die Wechselspannungen in metallisch ausgeführten achseninduzierten Wirbelströmen treten bei Kraftfahrzeugen häufig hochfrequente Potentialschwankungen in einem sehr weiten Frequenzbereich von 1 kHz bis zu einigen 100 MHz zwischen den rotierenden und den feststehenden Komponenten auf. Dabei kommt es aufgrund einer Abstrahlung dieser Frequenzen über die Wellen oder Achsen in den Raum (Antenneneffekt) zu Störungen an benachbarten elektronischen Geräten, wie beispielsweise Radioempfängern. Darüber hinaus ist es für die Fahrzeughersteller erforderlich, die entsprechenden gesetzlichen Vorgaben betreffend die zulässigen Emissionen von elektromagnetischer Strahlung einzuhalten.

Aus der WO 97/01200 A1 ist eine Ableiteinrichtung bekannt, die neben einer Kontaktkrafteinrichtung zur Ausbildung einer Wellenkontaktkraft eine Führungskontaktkrafteinrichtung aufweist zur Erzeugung einer Führungskontaktkraft zwischen einer Führungskontaktfläche des Kontaktelements und einer Statorkontaktfläche, wobei die Kontaktkrafteinrichtung eine an einer Basis der Führungseinrichtung angeordnete Vorspanneinrichtung aufweist.

Die EP 0 304 528 A2 betrifft eine Bürstenkontaktanordnung für einen Elektromotor, welche mit einer Blattfeder zur Unterdrückung von Bürstenvibrationen versehen ist.

Aus der DE 19 31 104 A1 ist eine Bürstenkontaktanordnung bekannt, die zur mechanischen Stabilisierung der Bürste in einer Führungseinrichtung eine Federanordnung aufweist.

Der vorliegenden Erfindung liegt daher die Aufgabe zugrunde, eine Ableiteinrichtung vorzuschlagen, die in besonderer Weise für die Ableitung von Wirbelströmen und elektromagnetischer Strahlung von rotierenden Bauteilen in feststehende Bauteile einer Maschine geeignet ist.

Zur Lösung dieser Aufgabe weist die Führungseinrichtung bei der erfindungsgemäßen Ableiteinrichtung eine Statorkontaktfläche zur elektrischen Verbindung mit dem Statorteil auf, und die Ableiteinrichtung weist eine Führungskontaktkrafteinrichtung zur Erzeugung einer Führungskontaktkraft zwischen einer Führungskontaktfläche des Kontaktelements und der Statorkontaktfläche der Führungseinrichtung auf.

Das vorzugsweise als Kohlenstoffformkörper ausgebildete Kontaktelement ist demnach in einer Führungseinrichtung der Kontakteinrichtung axial verschiebbar aufgenommen, wobei die Kontaktkrafteinrichtung vergleichbar einer mit einer Federeinrichtung ausgebildeten Vorspanneinrichtung einer Kohlebürstenanordnung das Kontaktelement mit einer Wellenkontaktfläche gegen eine Rotorkontaktfläche der Welle andrückt. Bei der erfindungsgemäßen Ableiteinrichtung ist sichergestellt, dass nicht nur mittels der Kontaktkrafteinrichtung eine Wellenkontaktkraft für eine elektrische Kontaktierung der Welle ausgebildet ist, sondern darüber hinaus auch eine Führungskontaktkraft, die für die Ausbildung eines elektrischen Kontakts zwischen einer Führungskontaktfläche des Kontaktelements und der Statorkontaktfläche, die elektrisch mit dem Stator verbunden ist, sorgt.

Durch die Kontaktkrafteinrichtung wird sichergestellt, dass an dem Kontaktelement zwei unterschiedliche Kontaktflächen ausgebildet sind, nämlich die Wellenkontaktfläche und die Führungskontaktfläche des Kontaktelements, sodass parallel zu der Wellenkontaktierung auch eine elektrische Kontaktierung zwischen einer Umfangsfläche des Kontaktelements und der an den Stator elektrisch angeschlossenen Statorkontaktfläche der Führungseinrichtung realisiert ist.

Bei der Erfindung wird von der Erkenntnis Gebrauch gemacht, dass Wechselströme in einem elektrisch durchflossenen Leiter mit zunehmender Frequenz immer weniger über das Volumen des Leiters übertragen werden, sondern sich zunehmend in den benachbart den Oberflächen des Leiters ausgebildeten Randzonen des Leiters konzentrieren. Dieser Umstand wird auch als Skineffekt bezeichnet, der insbesondere bei der Übertragung von elektrischer Energie mittels elektromagnetischer Wellen auftritt, sodass entsprechend der vorbeschriebenen Randzonenkonzentration auch nur ein kleiner Teil der elektromagnetischen Energie in Form elektrischer und magnetischer Felder in das Leitervolumen gelangt und es zu einer Energiemaximierung in den Randzonen kommt. Die Ausbildung der Führungskontaktfläche an einer Randzone, also der Umfangsfläche des Kontaktelements, dadurch, dass das Kontaktelement mit der Führungskontaktkrafteinrichtung in geeigneter Weise beaufschlagt wird, um einen elektrischen Kontakt zwischen der Führungskontaktfläche bzw. der Umfangsfläche des Kontaktelements und der Führungseinrichtung herzustellen, führt zur Ausbildung eines möglichst kurzen Ableitungsweges der Störungen von der Welle in den Stator, also die Masse des elektrischen Systems. Hiermit werden einerseits Wirbelströme und andererseits hochfrequente Störungen auf direktem Weg über das Kontaktelement in den Stator eingeleitet, sodass insbesondere elektromagnetische Abstrahlungseffekte, also die Emission elektromagnetischer Strahlung, verhindert oder zumindest in ihrem Umfang entscheidend reduziert werden kann.

Erfindungsgemäß weist die Kontaktkrafteinrichtung eine an einer Basis der Führungseinrichtung angeordnete Vorspanneinrichtung auf und entspricht daher den in üblicher Weise an Kohlebürstenanordnungen vorgesehenen Kontaktkrafteinrichtungen, sodass zur Ausgestaltung einer erfindungsgemäßen Ableiteinrichtung auch die Verwendung einer konventionell ausgebildeten Führungseinrichtung möglich ist, bei der sich die Vorspanneinrichtung zwischen dem Kontaktelement und einer Basis der Führungseinrichtung abstützt. Die Basis kann dabei unmittelbar an der Führungseinrichtung ausgebildet sein oder auch durch eine Grundplatte oder dergleichen, auf der die Führungseinrichtung ausgebildet oder montiert ist.

Erfindungsgemäß ist die Führungseinrichtung als Kontakthülse ausgebildet mit zwei diametral einander gegenüberliegenden Wandbereichen, wobei ein erster Wandbereich mit der Führungskontakteinrichtung versehen ist und der gegenüberliegende zweite Wandbereich als Statorkontaktfläche ausgebildet ist, lässt sich die Führungseinrichtung der erfindungsgemäßen Ableiteinrichtung auf Grundlage einer ergänzenden Ausgestaltung einer konventionellen Führungseinrichtung mit einer Führungskontaktkrafteinrichtung herstellen.

Erfindungsgemäß ist bei einer Ausbildung der Führungskontaktkrafteinrichtung der erste Wandbereich mit einer biegeelastisch gegen das Kontaktelement anliegenden Federlasche versehen. Bei entsprechender Materialwahl zur Ausbildung der Kontakthülse ist es daher zur Ausbildung der Führungskontaktkrafteinrichtung lediglich notwendig, den ersten Wandbereich mit einer etwa U-förmigen Ausstanzung zu versehen und eine derart im Wandbereich ausgebildete Lasche zur Ausbildung eines über den Wandbereich vorstehenden Überstands aufzubiegen.

Es kann vorgesehen werden, dass das Kontaktelement zumindest an seiner Führungskontaktfläche mit einer elektrisch leitfähigen Beschichtung versehen ist, um einen Kontaktwiderstand zwischen der am Umfang des Kontaktelements ausgebildeten Führungskontaktfläche und der Statorkontaktfläche der Führungseinrichtung zu minimieren.

Die Führungseinrichtung der Ableiteinrichtung kann zumindest im Bereich der Statorkontaktfläche mit einer elektrisch leitfähigen Beschichtung versehen sein, um auf diese Weise den Kontaktwiderstand zu minimieren.

Besonders vorteilhaft ist es auch, wenn die Beschichtung mit einer weiteren metallischen oder halbmetallischen, kapazitiv wirkenden Beschichtung versehen ist.Weiterhin kann es sich auch als vorteilhaft erweisen, wenn zwischen dem Kontaktelement und der Führungseinrichtung eine Kabelverbindung vorgesehen ist, oder wenn zwischen der Führungskontaktfläche bzw. der auf der Führungskontaktfläche ausgebildeten leitfähigen Beschichtung und der Führungseinrichtung ein zusätzlicher Kontakt zwischen dem Kontaktelement und der Führungseinrichtung neben dem über die Führungskontaktfläche ausgebildeten Kontakt durch eine Kabelverbindung vorgesehen ist. Diese Kabelverbindung hat primär die Funktion zur Ableitung von niederfrequenten Strömen oder Gleichströmen, wobei im Falle der Ableitung von Wechselströmen eine insbesondere zur Ableitung von hochfrequenten Strömen geeignete Hochfrequenzlitze zum Einsatz kommen sollte, um einen Antenneneffekt so weit als möglich zu unterdrücken.

Vorteilhafte Ausführungsformen der Erfindung sind Gegenstand der weiteren Unteransprüche.

Als besonders vorteilhaft erweist es sich, wenn die leitfähige Beschichtung als leitfähiges Metall ein Metall aus einer Gruppe von Metallen, umfassend Kupfer, Silber, Gold, Aluminium, Eisen, Kobalt, Nickel, Chrom, Mangan, Zink, Zinn, Antimon oder Wismut, aufweist. Vorzugsweise ist die leitfähige Beschichtung mehrschichtig ausgebildet, wobei die weitere Schicht als metallische oder halbmetallische, kapazitiv wirkende Schicht ausgebildet ist.

Besonders bevorzugt ist es auch, wenn das als Kohlenstoffformkörper ausgebildete Kontaktelement Partikel aus ferro- oder ferrimagnetischen Substanzen, neben Eisen, Kobalt und Nickel sowie vorzugsweise Oxide einer die Metalle Eisen, Nickel, Mangan, Kupfer, Zink oder Chrom umfassenden Gruppe, aufweist sowie einzeln oder in Kombination Spinelle des Typs AB₂X₄ mit den Buchstaben A (zweiwertig) und B (dreiwertig) als Stellvertreter für Metallkationen mit einer aufsummierten Ordnungszahl von 8 und X als Platzhalter für Sauerstoff- oder Schwefelatome aufweist.

Die Ableiteinrichtung kann eine Mehrfachanordnung der Kontakteinrichtungen aufweisen, derart, dass die Kontakteinrichtungen über den Umfang der Welle und jeweils radial zur Längsachse der Welle verteilt angeordnet sind.

Nachfolgend werden bevorzugte Ausführungsformen der Ableiteinrichtung anhand der Zeichnungen näher erläutert.

Es zeigen:
- **Fig. 1**: eine Ableiteinrichtung in einer ersten Ausführungsform in isometrischer Darstellung;
- **Fig. 2**: die in **Fig. 1** dargestellte Ableiteinrichtung in Schnittdarstellung gemäß Schnittlinienverlauf II-II in **Fig. 1****.**

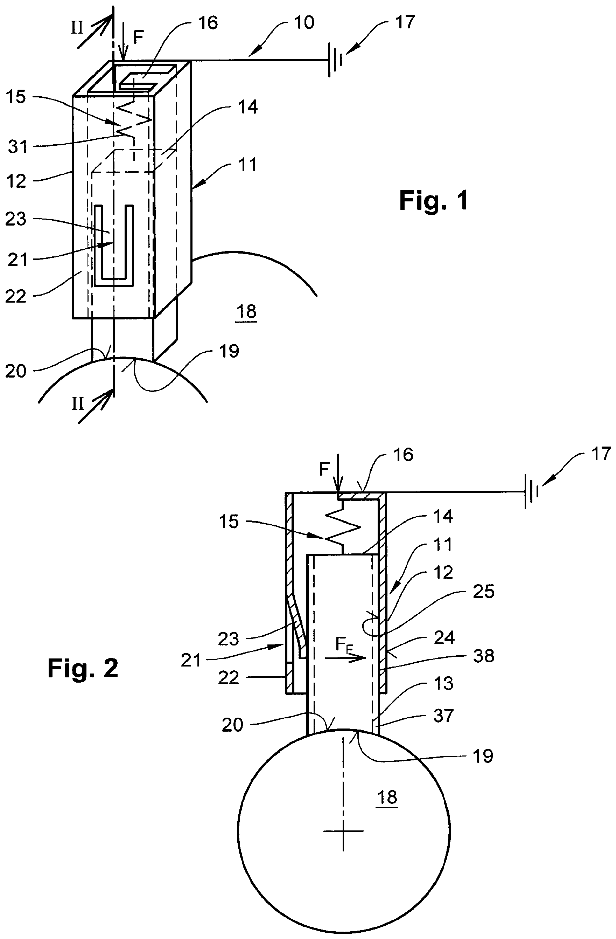

**Fig. 1** zeigt eine Ableiteinrichtung 10 mit einer Kontakteinrichtung 11, die eine als Führungshülse 12 ausgebildete Führungseinrichtung sowie ein in der Führungshülse 12 aufgenommenes Kontaktelement 13 aufweist, das im vorliegenden Fall aus einem Kohlenstoffformkörper gebildet ist.

Das Kontaktelement 13 ist axial verschiebbar in der Führungshülse 12 aufgenommen und wird an einer stirnseitigen Endfläche 14, die sich im Inneren der Führungshülse 12 befindet, mit einer von einer Kontaktkrafteinrichtung 15 erzeugten Vorspannkraft F in axialer Richtung beaufschlagt. Die Kontaktkrafteinrichtung 15 weist im vorliegenden Fall zur Erzeugung einer Vorspannkraft F eine zwischen der Endfläche 14 des Kontaktelements 13 und einer hier als auskragende Stützlasche ausgebildeten Basis 16 der Führungshülse 12 vorgespannt angeordnete Schraubenfeder 31 auf. Die Vorspannung der Schraubenfeder 31 wird durch eine geeignete Relativanordnung der Kontakteinrichtung 11 zwischen einem Statorteil 17 einer nicht näher dargestellten Maschine, das schaltungstechnisch eine elektrische Masse bildet, und einer Welle 18 erzeugt, wobei die Welle 18 einen Rotorteil der Maschine und schaltungstechnisch einen elektrischen Leiter ausbildet. Über die Kontakteinrichtung 11 kann ein Wechselstrom von der Welle 18 an die elektrische Masse bzw. den Statorteil 17 der Maschine abgeleitet werden.

Aufgrund der zwischen der Basis 16 der Führungshülse 12 und der Welle 18 in axialer Richtung vorgespannten Anordnung des Kontaktelements 13 ist zwischen einer stirnseitigen Wellenkontaktfläche 19 des Kontaktelements 13 und einer am Umfang der Welle 18 ausgebildeten Rotorkontaktfläche 20 der Welle 18 ein elektrischer Kontakt ausgebildet.

Zusätzlich zu der Kontaktkrafteinrichtung 15, die, wie vorstehend beschrieben, den elektrischen Kontakt zwischen dem Kontaktelement 13 und der Welle 18 ermöglicht, ist bei der in den **Fig. 1** und **2** dargestellten Ableiteinrichtung 10 eine Führungskontaktkrafteinrichtung 21 vorgesehen, die an einem ersten Wandbereich 22 der Führungshülse 12 eine biegeelastische Federlasche 23 aufweist, die unter Vorspannung an dem Kontaktelement 13 anliegt, derart, dass das Kontaktelement 13 gegen einen dem ersten Wandbereich 22 gegenüberliegenden Wandbereich 38 mit einer Führungskontaktkraft F_{F} gedrückt wird, sodass zwischen einer Führungskontaktfläche 24 des Kontaktelements 13 und einer gegenüberliegenden Statorkontaktfläche 25 der Führungshülse 12 zusätzlich zum Wellenkontakt ein Statorkontakt ausgebildet ist, und somit eine elektrisch leitende Verbindung zwischen der Führungskontaktfläche 24 des Kontaktelements 13 und dem Statorteil 17 über die elektrisch leitend mit dem Statorteil 17 verbundene Führungshülse 12 geschaffen ist.

Somit werden insbesondere in einer am Umfang des Kontaktelements 13 ausgebildeten Randzone 37 des Kontaktelements 13 konzentrierte, von der Welle 18 abgeleitete Wechselströme über die am Umfang des Kontaktelements 13 ausgebildete Führungskontaktfläche 24 auf kürzestem Weg in die Führungshülse 12 übergeleitet, welche ihrerseits an das Statorteil 17 angeschlossen ist.

Einen wesentlichen Beitrag zur Ableitung und Dämpfung von hochfrequenten elektromagnetischen Störungen liefert auch der innere Aufbau der Kontaktelemente 13, 27, 43 als Kohlenstoffformkörper mit Grafit oder einer anderen Kohlenstoff-Modifikation als Hauptvolumenanteil. Da die Kontaktelemente 13, 27, 43 bei der Entstörung nur geringe Ströme leiten müssen, ist es nicht erforderlich, dass die Kontaktelemente 13, 27, 43 einen hohen Anteil einer gut leitfähigen Komponente, wie beispielsweise Kupfer oder Silber enthalten. Vorteilhaft ist es auch, wenn im Inneren der Kontaktelemente 13, 27, 43 ferro- oder ferrimagnetisch wirkende Substanzen verteilt sind. Solche Stoffe umfassen neben Eisen, Kobalt und Nickel diverse Oxide der Elemente Eisen (FeO, Fe₂O₃, Fe₃O₄), Nickel (NiO), Mangan (MnO, MnO₂, Mn₂O₃, Mn₃O₄), Chrom (CrO₂, Cr₂O₃), Kupfer (CuO, Cu₂O) und Zink (ZnO), aber auch Verbindungen aus der Klasse der Spinelle, welche den Typ AB₂X₄ mit A (zweiwertige Kationen) und B (dreiwertige Kationen) als Stellvertreter für Metallkationen mit einer aufsummierten Oxidationszahl von 8 und X als Platzhalter für Sauerstoff- oder Schwefelatome aufweisen.

Bezüglich der Verteilung dieser Partikel in den Kontaktelementen 13, 27, 43 ergeben sich unterschiedlichste Möglichkeiten: In einer einfachen Ausführungsform können die Partikel homogen über das gesamte Volumen verteilt sein. Vielfach ergibt sich bedingt durch eine pulvermetallurgische Herstellung der Kontaktelemente 13, 27, 43 in einem Formpressverfahren eine Texturierung oder Anisotropie, weil sich Partikel bevorzugt parallel zur Pressfläche orientieren. Durch eine gezielte Einbringung von anisotropen Partikeln kann dieser Effekt verstärkt werden. Eine andere Art der Anisotropie kann durch die Einbringung von Kurzfasern erzielt werden, welche ebenfalls durch spezielle Formgebungsverfahren (z.B.: Strangpressen) ausgerichtet werden können.

In Verbindung mit der Verwendung von ferro- oder ferrimagnetisch wirksamen Partikeln ist es besonders vorteilhaft, wenn der Kohlenstoffformkörper der Kontaktelemente 13, 27, 43 zwei unterschiedliche Mischungen aufweist, wobei die eine entweder keine oder nur wenige dieser Partikel enthält, aber dafür die andere eine sehr hohe Anzahl aufweist. Dadurch kann beispielsweise in einem sich abnutzenden Bereich der über die Einsatzdauer verschleißenden Kontaktelemente 13, 27, 43 eine Mischung ohne magnetische Partikel gewählt werden und der nicht verschleißende Endbereich des Kontaktelements mit einem hohen Anteil ausgestattet werden.

Bei einer weiteren Ausführungsform des Kohlenstoffformkörpers weist die Konzentration der magnetisch wirksamen Partikel von der Wellenkontaktfläche der Kontaktelemente 13, 27, 43 zum gegenüberliegenden Endbereich hin ein ansteigenden Gradienten auf.

## Patentansprüche

1. Ableiteinrichtung (10) zur Ableitung elektrischer Störungen, insbesondere Ströme, von einem insbesondere als Welle (18) ausgebildeten Rotorteil einer Maschine in einen Statorteil (17) der Maschine mit einer Kontakteinrichtung (11), umfassend ein in einer Führungseinrichtung axial verschiebbar aufgenommenes Kontaktelement (13), das mittels einer Kontaktkrafteinrichtung (15) zur Ausbildung einer Wellenkontaktkraft F_{w} für einen elektrischen Kontakt zwischen einer Wellenkontaktfläche (19) des Kontaktelements (13) und einer Rotorkontaktfläche (20) der Welle (18) beaufschlagt wird wobei die Führungseinrichtung eine Statorkontaktfläche (25) zur elektrischen Verbindung mit dem Statorteil (17) aufweist und die Ableiteinrichtung eine Führungskontaktkrafteinrichtung (21) aufweist zur Erzeugung einer Führungskontaktkraft F_{F} zwischen einer Führungskontaktfläche (24) des Kontaktelements (13) und der elektrisch mit dem Statorteil (17) verbundenen Statorkontaktfläche (25), wobei die Kontaktkrafteinrichtung (15) eine an einer Basis (16) der Führungseinrichtung angeordnete Vorspanneinrichtung aufweist, **dadurch gekennzeichnet, dass** die Führungseinrichtung als Kontakthülse (12) ausgebildet ist mit zwei diametral einander gegenüberliegenden Wandbereichen, wobei ein erster Wandbereich (22) mit der Führungskontaktkrafteinrichtung versehen ist, und der gegenüberliegende zweite Wandbereich als Statorkontaktfläche (25) ausgebildet ist, und dass zur Ausbildung der Führungskontaktkrafteinrichtung (21) der erste Wandbereich (22) mit einer biegeelastisch gegen das Kontaktelement (13) anliegenden Federlasche (23) versehen ist.

2. Ableiteinrichtung nach Anspruch 1,
**dadurch gekennzeichnet,**
**dass** das Kontaktelement (13) zumindest an seiner zweiten Führungskontaktfläche (24) mit einer elektrisch leitfähigen Beschichtung versehen ist.

3. Ableiteinrichtung nach Anspruch 2,
**dadurch gekennzeichnet,**
**dass** die Beschichtung mit einer weiteren metallischen oder halbmetallischen, kapazitiv wirkenden Beschichtung versehen ist.

4. Ableiteinrichtung nach einem der vorangehenden Ansprüche,
**dadurch gekennzeichnet,**
**dass** zwischen dem Kontaktelement und der Führungseinrichtung eine Kabelverbindung vorgesehen ist.

5. Ableiteinrichtung nach einem der Ansprüche 2 bis 4,
**dadurch gekennzeichnet,**
**dass** zwischen der leitfähigen Beschichtung des Kontaktelements und der Führungseinrichtung eine Kabelverbindung vorgesehen ist.

6. Ableiteinrichtung nach einem der vorangehenden Ansprüche,
**dadurch gekennzeichnet,**
**dass** das Kontaktelement (13) ferro- oder ferrimagnetisch wirkende Substanzen aufweist, neben Eisen, Kobalt oder Nickel, vorzugsweise Eisenoxide, insbesondere aus der Gruppe umfassend FeO, Fe₂O₃, Fe₃O₄, Nickeloxide, insbesondere NiO, Manganoxide, insbesondere aus der Gruppe umfassend MnO, MnO₂, Mn₂O₃, Mn₃O₄, Chromoxide, insbesondere aus der Gruppe umfassend CrO₂, Cr₂O₃, Kupferoxide, insbesondere aus der Gruppe umfassend CuO, Cu₂O oder Zinkoxide, insbesondere ZnO, sowohl einzeln oder in Kombination miteinander oder Verbindungen aus der Klasse der Spinelle, welche den Typ AB₂X₄ mit A (zweiwertige Kationen) und B (dreiwertige Kationen) als Stellvertreter für Metallkationen mit einer aufsummierten Oxidationszahl von 8 und X als Platzhalter für Sauerstoff- oder Schwefelatome aufweisen.

7. Ableiteinrichtung nach Anspruch 6,
**dadurch gekennzeichnet,**
**dass** die ferro- oder ferrimagnetisch wirkende Substanzen homogen verteilt sind.

8. Ableiteinrichtung nach Anspruch 6 oder 7,
**dadurch gekennzeichnet,**
**dass** die ferro- oder ferrimagnetisch wirkende Substanzen eine Vorzugsorientierung aufweisen oder mehrschichtig angeordnet sind.

9. Ableiteinrichtung nach Anspruch 6,
**dadurch gekennzeichnet,**
**dass** die Verteilung der ferro- oder ferrimagnetisch wirkenden Substanzen im Kontaktelement (13) einen vorzugsweise in Abnutzungsrichtung ausgebildeten Gradienten aufweist.

## Claims

1. A discharging device (10) for discharging electrical interference, in particular currents, from a rotor part of a machine, said rotor part in particular being a shaft (18), into a stator part (17) of the machine, the discharging device having a contact device (11) comprising a contact element (13) which is accommodated in an axially displaceable manner in a guide and which is acted on by a contact force device (15) for generating a shaft contact force F_{w} in order to establish electrical contact between a shaft contact surface (19) of the contact element (13) and a rotor contact surface (20) of the shaft (18), the guide having a stator contact surface (25) for forming an electrical connection with the stator part (17) and the discharging device having a guide contact force device (21) for generating a guide contact force F_{F} between a guide contact surface (24) of the contact element (13) and the stator contact surface (25) electrically connected to the stator part (17), the contact force device (15) having a pre-loading device disposed on a base (16) of the guide,
**characterized in that**
the guide is a contact sleeve (12) having two diametrically opposed wall portions, a first wall portion (22) being provided with the guide contact force device and the opposite second wall portion being a stator contact surface (25), and that the first wall portion (22) is provided with a spring tab (23) which is in elastic contact with the contact element (13) so as to form the guide contact force device (21).

2. The discharging device according to claim 1,
**characterized in that**
the contact element (13) is provided with an electrically conductive coating on at least its second guide contact surface (24).

3. The discharging device according to claim 2,
**characterized in that**
the coating is provided with another capacitive metallic or metalloid coating.

4. The discharging device according to any one of the preceding claims,
**characterized in that**
a cable connection is provided between the contact element and the guide.

5. The discharging device according to any one of claims 2 to 4,
**characterized in that**
a cable connection is provided between the conductive coating of the contact element and the guide.

6. The discharging device according to any one of the preceding claims,
**characterized in that**
the contact element (13) has ferromagnetic or ferrimagnetic substances aside from iron, cobalt or nickel, preferably iron oxides, in particular from the group comprising FeO, Fe₂O₃, Fe₃O₄, nickel oxides, in particular NiO, manganese oxides, in particular from the group comprising MnO, MnO₂, Mn₂O₃, Mn₃O₄, chromium oxides, in particular from the group comprising CrO₂, Cr₂O₃, copper oxides, in particular from the group comprising CuO, Cu₂O, or zinc oxides, in particular ZnO, both separately or in combination with each other, or compounds from the class of spinels, which are of the type AB₂X₄, with A (divalent cations) and B (trivalent cations) representing metal cations having a combined oxidation number of 8 and X being a placeholder for oxygen atoms or sulfur atoms.

7. The discharging device according to claim 6,
**characterized in that**
the ferromagnetic or ferrimagnetic substances are distributed homogenously.

8. The discharging device according to claim 6 or 7,
**characterized in that**
the ferromagnetic or ferrimagnetic substances have a preferred orientation or are disposed in multiple layers.

9. The discharging device according to claim 6,
**characterized in that**
the distribution of the ferromagnetic or ferrimagnetic substances in the contact element (13) shows a gradient, preferably a gradient in the direction of wear.

## Revendications

1. Dispositif de décharge (10) destiné à décharger des interférences électriques, notamment des courants, à partir d'une partie de rotor d'une machine, ladite partie rotor étant notamment un arbre (18), dans une partie de stator (17) de la machine, le dispositif de décharge ayant un dispositif de contact (11) comprenant un élément de contact (13) qui est logé dans un guide d'une manière axialement déplaçable et sur lequel agit un dispositif de force de contact (15) afin de générer une force de contact d'arbre F_{w} afin d'établir un contact électrique entre une surface de contact d'arbre (19) de l'élément de contact (13) et une surface de contact de rotor (20) de l'arbre (18), le guide ayant une surface de contact de stator (25) destiné à former une connexion électrique avec la partie de stator (17) et le dispositif de décharge ayant un dispositif de force de contact de guide (21) destiné à générer une force de contact de guide F_{F} entre une surface de contact de guide (24) de l'élément de contact (13) et la surface de contact de stator (25) connectée électriquement à la partie de stator (17), le dispositif de force de contact (15) ayant un dispositif de prétension disposé sur une base (16) du guide,
**caractérisé en ce que**
le guide est un fourreau de contact (12) ayant deux parties de paroi opposées de manière diamétrale, une première partie de paroi (22) étant munie du dispositif de force de contact de guide et la deuxième partie de paroi opposée étant une surface de contact de stator (25), et **en ce que** la première partie de paroi (22) est munie d'une languette de ressort (23) qui est en contact élastique avec l'élément de contact (13) afin de former le dispositif de force de contact de guide (21).

2. Dispositif de décharge selon la revendication 1,
**caractérisé en ce que**
l'élément de contact (13) est muni d'un revêtement électriquement conducteur au moins sur sa deuxième surface de contact de guide (24).

3. Dispositif de décharge selon la revendication 2,
**caractérisé en ce que**
le revêtement est muni d'un autre revêtement capacitif métallique ou semi-métallique.

4. Dispositif de décharge selon l'une quelconque des revendications précédentes,
**caractérisé en ce qu'**
une liaison par câble est disposée entre l'élément de contact et le guide.

5. Dispositif de décharge selon l'une quelconque des revendications 2 à 4,
**caractérisé en ce qu'**
une liaison par câble est disposée entre le revêtement conducteur de l'élément de contact et le guide.

6. Dispositif de décharge selon l'une quelconque des revendications précédentes,
**caractérisé en ce que**
l'élément de contact (13) a des substances ferromagnétiques ou ferrimagnétiques en plus du fer, du cobalt ou du nickel, de préférence des oxydes de fer, notamment du groupe comprenant FeO, Fe₂O₃, Fe₃O₄, des oxydes de nickel, notamment NiO, des oxydes de manganèse, notamment du groupe comprenant MnO, MnO₂, Mn₂O₃, Mn₃O₄, des oxydes de chrome, notamment du groupe comprenant CrO₂, Cr₂O₃, des oxydes de cuivre, notamment du groupe comprenant CuO, Cu₂O, ou des oxydes de zinc, notamment ZnO, tant séparément qu'en combinaison, ou des composés de la classe de spinelles, qui sont de type AB₂X₄, A (cations divalents) et B (cations trivalents) représentant des cations métalliques ayant un nombre d'oxydation combiné de 8 et X étant un caractère de remplacement pour des atomes d'oxygène ou des atomes de soufre.

7. Dispositif de décharge selon la revendication 6,
**caractérisé en ce que**
les substances ferromagnétiques ou ferrimagnétiques sont réparties de manière homogène.

8. Dispositif de décharge selon la revendication 6 or 7,
**caractérisé en ce que**
les substances ferromagnétiques ou ferrimagnétiques ont une orientation préférée ou elles sont disposées en plusieurs couches.

9. Dispositif de décharge selon la revendication 6,
**caractérisé en ce que**
la répartition des substances ferromagnétiques ou ferrimagnétiques dans l'élément de contact (13) présente un gradient, de préférence un gradient dans la direction de l'usure.
